# EUROPÄISCHE PATENTSCHRIFT

(11) **EP 0 586 334 B1**
(45) Veröffentlichungstag und Bekanntmachung des Hinweises auf die Patenterteilung: **04.06.1997**
(21) Anmeldenummer: 93810559.0
(22) Anmeldetag: 09.08.1993
(51) Int. Cl.: B23D 29/02, B26F 1/36, E06B 9/58

(54) **Ausbrechzange**
Punching tool
Outil à poinçonner

(30) Priorität: 11.08.1992 CH 2504/92
(43) Veröffentlichungstag der Anmeldung: 09.03.1994
(73) Patentinhaber: HINNO AG, CH-6045 Meggen (CH)
(72) Erfinder: Heinrich, Alfred S., CH-6045 Meggen (CH)
(74) Vertreter: Zimmermann, Hans, Dr.

(56) Entgegenhaltungen:
- GB-A- 2 054 443
- US-A- 2 624 940

## Beschreibung

Die Erfindung betrifft eine Ausbrechzange für das Ausbrechen von Gleiter-Durchgangsöffnungen in Gardinen- und Vorhangschienen gemäss Oberbegriff von Patentanspruch 1.

Vorhangschienen werden in der Regel in Standardlängen geliefert und erst am Montageort auf die passende Länge geschnitten. Die den Schienenlängsschlitz erweiternden Öffnungen, welche für das Einführen oder Herausnehmen der Vorhanggleiter von unten benötigt werden, sind daher in den gelieferten Schienen normalerweise noch nicht vorhanden, sondern werden meist ebenfalls erst am Montageort ausgebrochen bzw. ausgeklinkt, damit die geeignete Stelle den örtlichen Gegebenheiten entsprechend gewählt werden kann. Diesem Zweck dienen spezielle Ausbrechzangen mit einem Stempel, der in die Vorhangschiene eingeführt und anschliessend gegen eine Matrize bewegt werden kann, um die Ausnehmung auszustanzen.

Die üblichen Ausbrechzangen haben einen ganzen Stempel, der rechte und linke Schienenrandsteg wird also gleichzeitig ausgebrochen. Dies bedeutet, dass der Stempel nicht durch den Schienenlängsschlitz von unten eingeführt werden kann, sondern nur seitlich durch die offene Schiene, was unmöglich wird, wenn die Schiene bereits montiert ist und die Schienenenden durch die Wand oder andere Gegenstände verdeckt werden. Der Ausbruch muss mit solchen Zangen also gemacht werden, bevor die Schiene montiert wird. Manchmal wird das jedoch vergessen. Zudem kommt es oft vor, dass man erst bei montiertem Zustand der Schiene oder wenn die Möbel eingeräumt sind, erkennt, wo der Ausbruch eigentlich gemacht werden sollte. Das ist dann mit solchen Zangen nicht mehr möglich.

Es gibt jedoch Ausbrechzangen mit halbem Stempel, die von unten in den Vorhangschienen-Längsschlitz eingeführt werden können. Dabei wird zuerst eine Hälfte ausgebrochen, dann muss die Zange um 180° gedreht werden, so dass eine Stanzung auf der anderen Seite erfolgen kann. Diese bekannten Ausbrechzangen haben aber noch grosse Nachteile.

Erstens ist es sehr schwierig, die zweite Ausbruchhälfte genau gegenüber der ersten auszustanzen, weil es keine automatische Zentrierung gibt und der Ort der Ausstanzung von der Matrize verdeckt wird. Ist der Ausbruch in den zwei Randstegen der Schiene versetzt, also nicht genau gegenüberliegend, so können viele der sich auf dem Markt befindlichen Feststeller nicht mehr verwendet werden, weil sie dann nicht mehr in den Ausbruch passen.

Als zweiter Nachteil dieser Ausbrechzangen mit halbem Stempel muss erwähnt werden, dass der Stempel beim Einführen in den Längsschlitz nicht automatisch an den Schienenrandsteg gedrängt wird, was zu einer unregelmässigen Ausbruchtiefe sowie zu schrägen Stanzungen führen kann.

Drittens verhindert die Anordnung der Zangenschenkel bei den bekannten Ausbrechzangen, dass Ausbrüche sehr nahe an der Wand, wo sie sehr oft sein sollten, gemacht werden können, weil die Wand den gespreizten Zangenschenkeln den Platz versperrt.

Demgegenüber liegt der Erfindung die Aufgabe zugrunde, ein Ausbrechzange vorzuschlagen, welche die genannten Nachteile vermeidet, somit fehlerhafte oder ungenaue Ausbrüche ausschliesst und die Anwendung der Zange vereinfacht.

Die erfindungsgemässe Ausbrechzange ist im unabhängigen Patentanspruch 1 definiert; bevorzugte Ausführungsformen ergeben sich aus den abhängigen Patentansprüchen.

Demgemäss ist anstelle der nicht vorhandenen zweiten Stempelhälfte ein bewegliches Führungsglied angeordnet, welches beim Ausbrechen der ersten Öffnungshälfte gegen die Matrize zurückweicht, beim Ausbrechen der zweiten Öffnungshälfte jedoch in der bereits gemachten ersten Ausbrechung einschnappen kann und auf diese Weise vorteilhaft dafür sorgt, dass die zweite Ausbrechung genau gegenüber der ersten erfolgt.

Im Hinblick auf eine verbesserte Unterstützung des Anwenders beim Positionieren des Stempels am Schienenrandsteg auch bei der ersten Ausbrechung werden weiter bevorzugte Ausführungsformen vorgeschlagen, bei welchen zusätzliche Positionierungshilfen vorgesehen sind.

Ferner kann vorzugsweise vorgesehen sein, den Stanzkopf im Kopf der Zange drehbar zu lagern sowie die Zangenschenkel asymmetrisch anzuordnen, wodurch es ermöglicht wird, Ausbrüche auch nahe bei einer Wand oder einem sonstigen Hindernis vorzunehmen.

Die Erfindung wird durch die folgenden, auch zeichnerisch dargestellten Ausführungsbeispiele näher erläutert. Dabei zeigt
Fig. 1 eine typische Schiene mit einer ausgebrochenen Durchgangsöffnung, in perspektivischer Unteransicht,
Fig. 2 in schematischem Längsschnitt ein Ausführungsbeispiel eines Stanzkopfs einer erfindungsgemässen Ausbrechzange in Ruhestellung,
Fig. 3-5 drei unterschiedliche Arbeitsstellungen des Stanzkopfs im Verlauf des Ausbrechvorgangs in zu Fig. 2 analoger Darstellung,
Fig. 6-9 eine weitere Ausführung des Führungsglieds, in Fig. 2-5 entsprechenden Arbeitsstellungen,
Fig. 10 eine Ausbrechzange mit asymmetrisch angeordneten Zangenschenkeln,
Fig. 11 einen drehbar im Kopf der Zange gelagerten Stanzkopf, in teilweise geschnittener Seitenansicht und
Fig. 12 einen Stanzkopf mit zusätzlichen Ausrichtnocken.

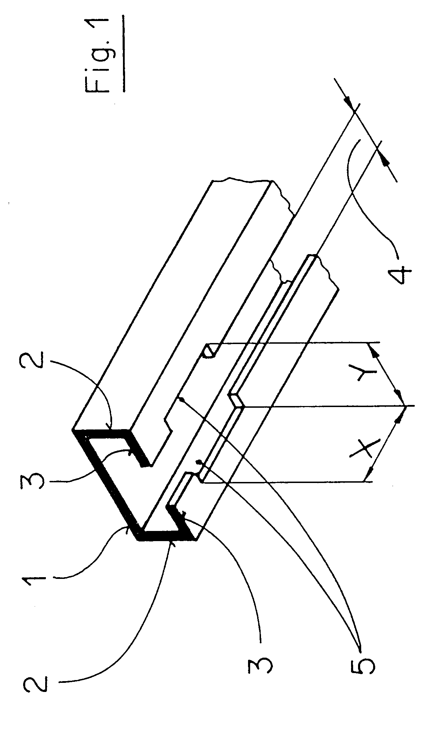

Die erfindungsgemässe Ausbrechzange ist zum vorzugsweisen Gebrauch an Vorhangschienen aus Metall oder Kunststoff mit unterem Längsschlitz bestimmt, welche üblicherweise, wie in Figur 1 dargestellt, eine obere durchgehende Wand 1, zwei Seitenwandungen 2 und zwei untere, den Längsschlitz 4 umgrenzende Randstege 3 aufweisen. Mit der Ausbrechzange wird eine Durchgangsöffnung 5 zum Einführen und Herausnehmen von Vorhanggleitern ausgebrochen. Diese Öffnung 5, in Fachkreisen oft Ausbruch genannt, ist eine örtliche Erweiterung des Längsschlitzes 4 mit einer Länge x und einer Breite y.

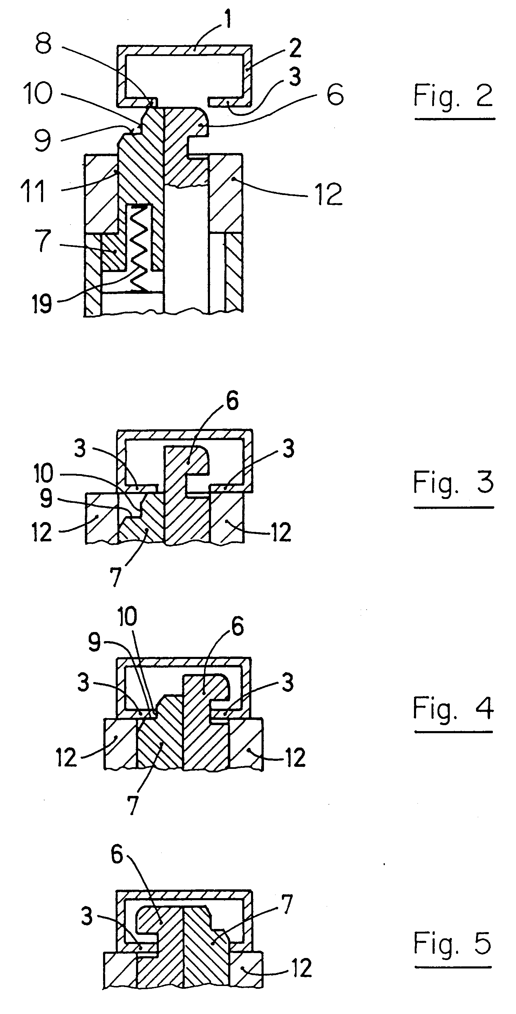

In Figur 2, die den Stanzkopf der Zange in Ruhestellung, also vor dem Einführen in die Schiene, zeigt, ist dessen grundsätzlicher Aufbau zu sehen. In einer Matrize 12 ist ein Stempel 6 verschiebbar geführt. Der Stempel 6 ist im Vergleich zu einem Stempel, mit welchem die gewünschte Öffnung 5 in einem Arbeitsschritt ausgebrochen werden könnte, nur halbseitig ausgebildet. Anstelle der fehlenden zweiten Stempelhälfte ist ein bewegliches Führungsglied 7 angeordnet, welches ebenfalls in der Matrize 12 verschiebbar geführt und durch eine Feder 19 bis zu einem Anschlag von unten gegen die Matrize vorgespannt ist, so dass es mit seinem Kopfbereich neben dem Stempel aus der Matrize hervorragt, sich jedoch von aussen bis auf die Höhe der Matrizenoberfläche zurückschieben lässt. Sein Querschnitt ist, unter Einhaltung eines gewissen Spielraums, dem Umriss der halben Öffnung 5 angepasst.

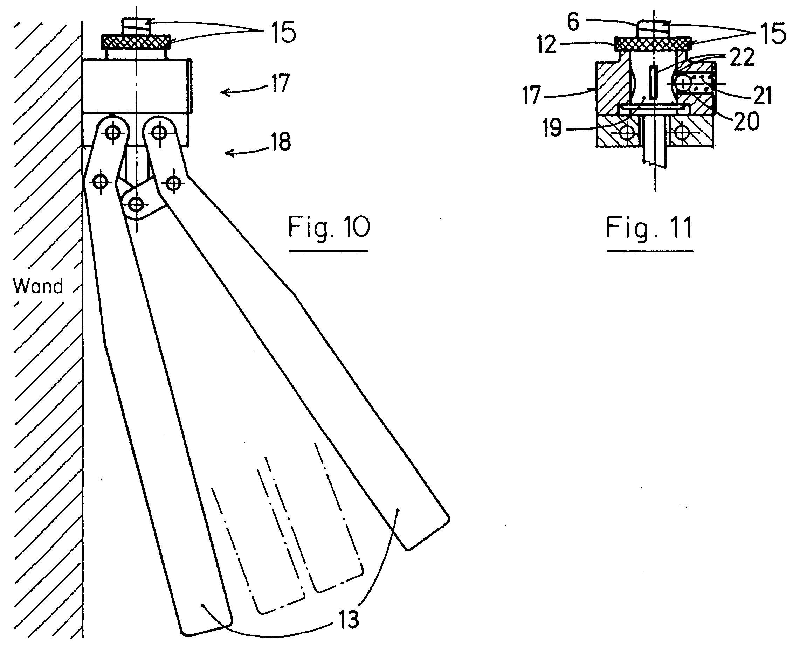

Der Stanzkopf, gesamthaft mit 15 bezeichnet (vgl. Fig. 10 und 11), ist in den Kopf 17 einer Zange eingesetzt, mit welcher der Stempel 6, beispielsweise über ein Hebelsystem 18, in an sich bekannter Weise gegen die Matrize 12 gezogen werden kann, um den sich im Stempel befindenden Teil auszustanzen.

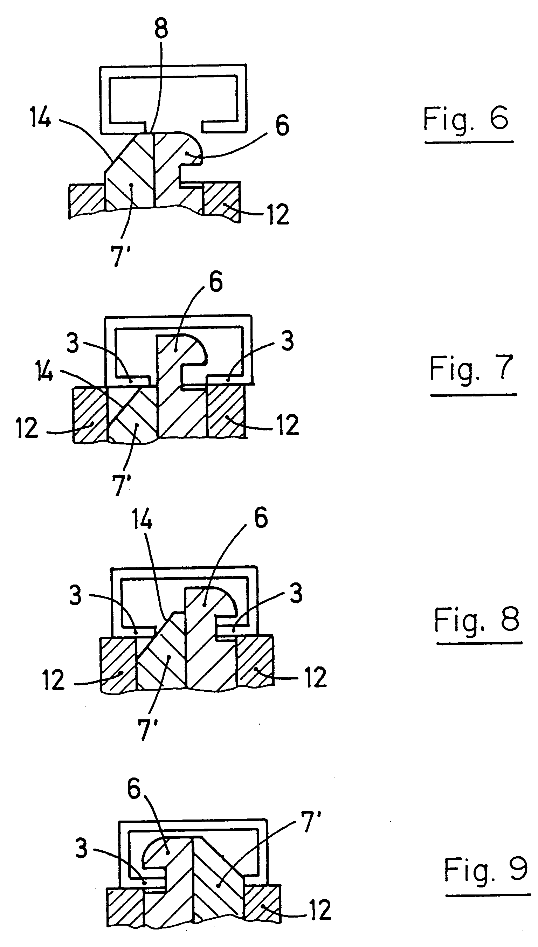

Der Ausbruch entsteht, indem zuerst auf einer Seite ein Teil des einen Randstegs, dann auf der gegenüberliegenden Seite ein Teil des anderen Randstegs herausgebrochen bzw. herausgeklinkt wird. Dazu wird zuerst an einer gewünschten, beliebigen Stelle der Schiene der halbseitige Stempel 6 durch den Schienen-Längsschlitz 4 eingeführt. Dabei stösst das bewegliche Führungsglied 7 mit seiner oberen Anschlagfläche 8 an der Aussenseite des auf seiner Seite gelegenen Randstegs 3 an und weicht zurück (vgl. Fig. 3 bzw. 7), so dass der Stempel 6 in Stanzposition gebracht und die erste Hälfte der Öffnung 5 ausgebrochen werden kann (vgl. Fig. 4 bzw. 8). Dann wird der Stanzkopf 15 um 180° gedreht und wieder in den Längsschlitz 4 eingeführt, wobei vorerst das Führungsglied 7 wiederum am Randsteg 3 anstossen wird. Durch Verschieben des Stanzkopfs im Längsschlitz kann jedoch bis zu derjenigen Stelle gefahren werden, an der das Führungsglied 7 in die bereits ausgebrochene Hälfte im Randsteg 3 einschnappt (vgl. Fig. 5 bzw. 9). Auf diese Weise ist sichergestellt, dass der Stempel 6 genau gegenüber der bereits ausgestanzten Öffnungshälfte positioniert ist, worauf die zweite Hälfte der Öffnung 5 passend ausgebrochen werden kann.

Um eine sichere Positionierung des Stempels am Schienenrandsteg auch für den Ausbruch der ersten Öffnungshälfte zu gewährleisten, sind bevorzugt zusätzliche Vorkehrungen getroffen.

Beim ersten, in den Figuren 2 bis 5 dargestellten Ausführungsbeispiel ist am Führungsglied 7 zusätzlich ein Anschlagschulter mit einer Anschlagfläche 9 und einer Anschlagflanke 10 ausgebildet. Die Lage der Anschlagflanke 10 ist so gewählt, dass nach dem Einführen des Stempels 6 in den - noch nicht ausgebrochenen - Längsschlitz 4 die obere Partie des Führungsteils 7 bis zum Anschlag der Anschlagfläche 9 am Randsteg 3 zwischen Stempel und Randsteg in den Längsschlitz eindringen kann, sofern sich der Stempel in der korrekten Stanzposition befindet (vgl. Fig. 4). Beim Einführen des Stempels kann so durch eine einfache Bewegung gegen die Schienenaussenseite die Anschlagschulter im Führungsglied am Randsteg zum Anliegen gebracht werden, worauf der Stempel über das Führungsglied in der korrekten Stanzposition und -ausrichtung am Randsteg abgestützt ist.

In den Figuren 6 bis 9 ist ein weiteres Ausführungsbeispiel zu sehen. Die gezeigten Arbeitsstellungen und die Teile mit Ausnahme des Führungsglieds entsprechen denjenigen in den Figuren 2 bis 5. Hier jedoch weist die obere Partie des mit 7' bezeichneten Führungsglieds auf der dem Stempel 6 abgewendeten Seite eine Abschrägung 14 auf. Damit wirkt das Führungsglied 7' beim Einführen des Stempels 6 in den - noch nicht ausgebrochenen - Längsschlitz als Keil, der sich am Randsteg 3 abstützt und den Stempel automatisch in die korrekte Stanzposition drängt (vgl. Fig. 8).

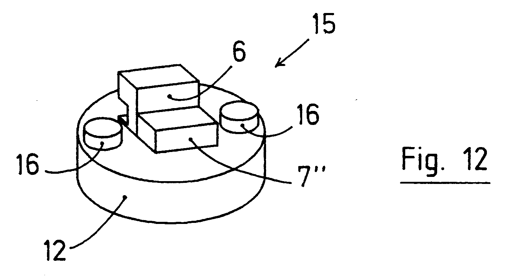

In Figur 12 ist ein drittes Ausführungsbeispiel dargestellt, bei dem am Führungsglied selbst, hier mit dem Bezugszeichen 7'' versehen, keine zusätzlichen Positionierungsmittel vorgesehen sind. Hingegen sind auf der Matrize 12 zwei Ausrichtnocken 16 angeordnet, deren Breite an die Breite des Schienen-Längesschlitzes angepasst ist. Diese Ausrichtnocken 16 ragen bei richtig in die Schiene eingeführtem Stempel 6 in den Längsschlitz hinein, liegen seitlich an den beiden Randstegen 3 an und legen somit die korrekte Stanzposition fest. Selbstverständlich wäre es möglich, anstelle der gezeigten Ausrichtnocken andere Ausrichtelemente vorzusehen, welche dieselbe Funktion übernähmen, beispielsweise eine Anzahl entsprechend angeordneter Stifte oder auch nur ein einzelner, sich in Schienenrichtung erstreckender Block von ausreichender Länge.

Um den bei üblichen Ausbrechzangen auftretenden Schwierigkeiten, Gleiter-Durchgangsöffnungen nahe einer Wand zu machen, zu begegnen, kann der Stanzkopf gemäss einer bevorzugten Ausführungsform drehbar im Kopf der Zange gelagert sein. Ein entsprechendes Ausführungsbeispiel zeigt Figur 11. Der Stanzkopf 15 ist mittels eines zylinderförmigen Fusses 19 in einer entsprechenden Bohrung im Kopfteil 17 der Zange eingesetzt und lässt sich um die Fuss-Mittelachse drehen. Gegebenenfalls kann ferner ein Rastmechanismus zur Festlegung geeigneter Drehstellungen vorgesehen sein, der im vorliegenden Beispiel eine Kugel 20, die durch eine Feder 21 gegen den Stanzkopf-Fuss 19 gedrückt wird, und Rastnuten 22 in der Aussenwand des Stanzkopf-Fusses umfasst. Mit einem derartig drehbaren Stanzkopf ist es möglich, die Betätigungsrichtung der Zangenschenkel in bezug auf die Schienenausrichtung frei zu wählen. Während bei üblichen Zangen die Betätigung parallel zum Schienenverlauf erfolgt, kann mit der hier vorgeschlagenen Ausführung in jedem beliebigen Winkel quer zur Schiene, zum Beispiel senkrecht zu ihr, gearbeitet werden, was für bestimmte Anwender (Rechts- bzw. Linkshänder) oder bei ungünstigen Platzverhältnissen von Vorteil ist.

In Ergänzung zu einem drehbaren Stanzkopf ist es gemäss einer weiteren Ausführungsform der Erfindung zweckmässig, die Zangenschenkel 13 nicht wie üblich symmetrisch anzuordnen, sondern, wie in Figur 10 gezeigt, in bezug auf die Mittelachse des Stanzkopfs 15 auf dieselbe Seite abgewinkelt vorzusehen. Durch diese asymmetrische Anordnung der Zangenschenkel ergibt sich in überraschend einfacher Weise die Möglichkeit, auch bei Betätigung der Zange in Schienenrichtung Ausbrüche ganz nahe an einer Wand zu machen.

## Patentansprüche

1. Ausbrechzange für das Ausbrechen von Gleiter-Durchgangsöffnungen (5) in Gardinen- und Vorhangschienen mit einem unteren Längsschlitz (4) und diesen begrenzenden Randstegen (3), welche einen Stanzkopf (15) mit einer Matrize (12) und einem durch den Schienen-Längsschlitz (4) einführbaren, halbseitig ausgebildeten Stempel (6) aufweist, dadurch *gekennzeichnet*, dass anstelle der nicht vorhandenen zweiten Stempelhälfte ein bewegliches Führungsglied (7;7';7'') angeordnet ist, welches parallel zum Stempel (6) verschiebbar in der Matrize (12) geführt und durch Belastung gegen die Wirkung eines elastischen Rückstellorgans (19) in der Matrize (12) versenkbar ist und dessen Querschnittkontur zumindest in dem Bereich, der sich in unbelastetem Zustand in Höhe der Matrizenoberfläche befindet, im wesentlichen dem Umriss der halben Gleiter-Durchgangsöffnung (5) entspricht.

2. Ausbrechzange nach Patentanspruch 1, dadurch *gekennzeichnet*, dass das Führungsglied (7) eine Anschlagschulter (9,10) aufweist, die nach einem Einführen des Stempels (6) in einen noch nicht ausgebrochenen Schienen-Längsschlitz (4) am Randsteg (3) zum Anliegen kommt und den Stempel (6) in der korrekten Stanzposition und -ausrichtung abstützt.

3. Ausbrechzange nach einem der Patentansprüche 1 oder 2, dadurch *gekennzeichnet*, dass das Führungsglied (7') in seiner oberen Partie auf der dem Stempel (6) abgewendeten Seite eine Abschrägung (14) aufweist, die beim Einführen des Stempels (6) in einen noch nicht ausgebrochenen Schienen-Längsschlitz (4) am Randsteg (3) zum Anliegen kommt und den Stempel (6) durch Keilwirkung in die korrekte Stanzposition und -ausrichtung drängt.

4. Ausbrechzange nach einem der Patentansprüche 1 bis 3, dadurch *gekennzeichnet*, dass auf der Matrize (12) ein Ausrichtelement (16) oder mehrere Ausrichtelemente (16) angeordnet ist bzw. sind, das oder die bei in die Schiene eingeführtem Stempel (6) an den Kanten beider Randstege (3) anliegt bzw. anliegen und die korrekte Stanzposition und -ausrichtung festlegt bzw. festlegen.

5. Ausbrechzange nach einem der Patentansprüche 1 bis 4, dadurch *gekennzeichnet*, dass der Stanzkopf (15) in einer quer zur Stempelarbeitsrichtung verlaufenden Ebene drehbar ist.

6. Ausbrechzange nach einem der Patentansprüche 1 bis 5, dadurch *gekennzeichnet*, dass die Zangenschenkel (13) in bezug auf die Mittelachse des Stanzkopfs (15) asymmetrisch angeordnet sind.

## Claims

1. Punching tool for punching out openings (5) for sliders in rails for curtains and drapes, having a lower longitudinal slot (4) and marginal webs (3) adjacent thereto, which comprises a punching head (15) having a die (12) and a punch (6) of semilateral construction adapted to be inserted through the longitudinal slot (4) in the rail, characterised in that, instead of the missing second half of the punch, there is provided a movable guide member (7; 7'; 7'') which is movably guided in the die (12) parallel to the punch (6) and can be lowered in the die (12) by stressing counter to the action of a resilient resetting member (19) and the cross sectional contour of which substantially corresponds to the outline of half the slider opening (5), at least in the region which is level with the surface of the die in the unstressed state.

2. Punching tool according to claim 1, characterised in that the guide member (7) has an abutment shoulder (9, 10) which, once the punch (6) has been inserted in an as yet unpunched longitudinal slot (4) in the rail, comes to abut on the marginal web (3) and supports the punch (6) in the correct position and alignment for punching.

3. Punching tool according to one of claims 1 and 2, characterised in that the guide member (7') has a bevel (14) in its upper part, on the side remote from the punch (6), which comes to abut on the marginal web (3) when the punch (6) is inserted in an as yet unpunched longitudinal slot (4) in the rail, and forces the punch (6) by a wedging action into the correct position and alignment for punching.

4. Punching tool according to one of claims 1 to 3, characterised in that one aligning member (16) or a plurality of aligning members (16) is or are mounted on the die (12) and abut(s) on the edges of the two marginal webs (3) when the punch (6) is inserted in the rail and define(s) the correct position and alignment for punching.

5. Punching tool according to one of claims 1 to 4, characterised in that the punching head (15) is rotatable in a plane extending transversely with respect to the direction of the punching operation.

6. Punching tool according to one of claims 1 to 5, characterised in that the legs (13) of the tool are arranged asymmetrically with respect to the central axis of the punching head (15).

## Revendications

1. Pince à poinçonner permettant de découper des ouvertures de passage (5) pour chariots dans des rails à voilages et rideaux comportant une fente longitudinale intérieure (4) et des chemins de roulement (3) délimitant celle-ci, la pince comportant une tête poinçonneuse (15) comportant une matrice (12) et un poinçon (6) pouvant être introduit à travers la fente longitudinale (4) du rail et étant aménagé unilatéralement, caractérisée en ce qu'un élément mobile de guidage (7; 7'; 7'') est disposé à la place du second demi-poinçon non existant, cet élément étant guidé de façon coulissante parallèlement au poinçon (6) dans la matrice (12) et pouvant être enfoncé dans la matrice (12), sous l'action d'une charge, à l'encontre d'un organe de rappel élastique (19), les contours de la section de l'élément correspondant essentiellement aux contours de la demi-ouverture de passage (5) pour chariots au moins dans la zone qui, à l'état libre, se situe au niveau de la surface de la matrice.

2. Pince à poinçonner selon la revendication 1, caractérisée en ce que l'élément de guidage (7) comporte un épaulement de butée (9, 10) qui, après l'engagement du poinçon (6) dans une fente longitudinale (4) non encore découpée du rail, vient en appui sur le chemin de roulement (3) et soutient le poinçon (6) dans la bonne position et dans le bon alignement de poinçonnage.

3. Pince à poinçonner selon l'une des revendications 1 ou 2, caractérisée en ce que l'élément de guidage (7') présente, dans sa partie supérieure, du côté tourné vers l'opposé du poinçon (6), un chanfrein (14) qui, lors de l'engagement du poinçon (6) dans une fente longitudinale (4) non encore découpée du rail, vient en appui sur le chemin de roulement (3) et force le poinçon (6) dans la bonne position et dans le bon alignement de poinçonnage grâce à un effet de coin.

4. Pince à poinçonner selon l'une des revendications 1 à 3, caractérisée en ce qu'un élément d'alignement (16) ou plusieurs éléments d'alignement (16) est/sont disposé(s) sur la matrice (12), qui, lorsque le poinçon (6) est engagé dans le rail, repose(nt) sur les bords des deux chemins de roulement (3) et arrête(nt) ainsi la bonne position et le bon alignement de poinçonnage.

5. Pince à poinçonner selon l'une des revendications 1 à 4, caractérisée en ce que la tête poinçonneuse (15) peut pivoter dans un plan s'étendant transversalement au sens de fonctionnement du poinçon.

6. Pince à poinçonner selon l'une des revendications 1 à 5, caractérisée en ce que les branches (13) de la pince sont agencées de façon asymétrique par rapport à l'axe médian de la tête poinçonneuse (15).
